# EUROPÄISCHE PATENTANMELDUNG

(11) **EP 2 738 481 A2**
(43) Veröffentlichungstag der Anmeldung: **04.06.2014**
(21) Anmeldenummer: 13005331.7
(22) Anmeldetag: 12.11.2013
(51) Int. Cl.: F24J 3/08

(54) **Sondenkörper**

(30) Priorität: 29.11.2012 AT 12572012
(71) Anmelder: Jansen AG, 9463 Oberriet (CH)
(72) Erfinder: Brülisauer, Urs, 9463 Oberriet (CH); Eggert, Dominik, 8046 Zürich (CH); Spörri, Robert, 8057 Zürich (CH); Werner, Uwe, 8825 Hütten (CH)
(74) Vertreter: Fechner, Thomas

(57) **Zusammenfassung**

Sondenkörper (1) für den Einbau in ein Bohrloch (2) als Geothermiesonde mit mehreren nebeneinander verlaufenden, von Wärmeträgerfluid durchströmbaren Wärmeträgerfluidschläuchen (3), wobei die, vorzugsweise alle, Wärmeträgerfluidschläuche (3) des Sondenkörpers (1) vor dem Einbau des Sondenkörpers (1) in das Bohrloch (2) zur Lagerung und/oder zum Transport des Sondenkörpers (1), vorzugsweise als ein Schlauchbündel (4), gemeinsam aufgewickelt sind. (Fig. 1)

## Beschreibung

Die vorliegende Erfindung betrifft einen Sondenkörper für den Einbau in ein Bohrloch als Geothermiesonde mit mehreren nebeneinander verlaufenden, von Wärmeträgerfluid durchströmbaren Wärmeträgerfluidschläuchen. Darüber hinaus betrifft die Erfindung auch ein Verfahren zur Herstellung eines solchen Sondenkörpers.

Zur Ausbildung von Geothermiesonden ist es beim Stand der Technik bekannt, Sondenkörper zu verwenden, bei denen mehrere Wärmeträgerfluidschläuche nebeneinander verlaufend im Bohrloch angeordnet sind. Die Wärmeträgerfluidschläuche werden oft mittels eines Sondenfußes paarweise fluidführend miteinander verbunden, sodass jeweils zwei Wärmeträgerfluidschläuche zu einem U-förmigen Gebilde zusammengesetzt werden, wobei einer der Wärmeträgerfluidschläuche das Wärmeträgerfluid auf dem Hinweg zum Sondenfuß und der andere der Wärmeträgerfluidschläuche das Wärmeträgerfluid auf dem Rückweg transportiert.

In der Praxis werden heutzutage die Wärmeträgerfluidschläuche einzeln aufgetrommelt zum Bohrloch transportiert. Auch der Sondenfuß wird in zwei Teilen zum Bohrloch mitgenommen. Auf der Baustelle erfolgt dann der Zusammenbau des Sondenkörpers und des Sondenfußes kurz vor seinem Einbau in das Bohrloch. Diese Vorgehensweise ist relativ aufwendig. Dies gilt vor allem für die am Bohrloch notwendigen Arbeiten zur Verbindung der zwei Teile des Sondenfußes und der Begradigung des Sondenendes. Zusätzlich muss auch noch ein Gewicht angebracht werden. Außerdem müssen diese Arbeiten zum Zusammenbau des Sondenkörpers bei Wind und Wetter also auch unter widrigen Bedingungen direkt am Bohrloch durchgeführt werden.

Aufgabe der Erfindung ist es, eine Verbesserung vorzuschlagen, welche den Zusammenbauaufwand am Bohrloch reduziert.

Die Erfindung sieht dazu vor, dass die, vorzugsweise alle, Wärmeträgerfluidschläuche des Sondenkörpers vor dem Einbau des Sondenkörpers in das Bohrloch zur Lagerung und/oder zum Transport des Sondenkörpers, vorzugsweise als ein Schlauchbündel, gemeinsam aufgewickelt sind.

Gemäß der Erfindung ist es somit vorgesehen, dass die, vorzugsweise alle, für den Sondenkörper benötigten Wärmeträgerfluidschläuche gemeinsam aufgetrommelt sind. Hierdurch wird ein sehr einfacher Einbau des Sondenkörpers in das Bohrloch möglich, da der Sondenkörper praktisch als solcher nur noch abgewickelt und in das Bohrloch eingebracht werden muss. Die beim Stand der Technik bekannte Notwendigkeit, mehrere Schlauchtrommeln mit jeweils einem Wärmeträgerfluidschlauch zum Bohrloch zu transportieren und beim Einbau gleichzeitig abzutrommeln bzw. abzurollen, entfällt. Der Aufwand am Bohrloch ist also deutlich reduziert. Vorzugsweise ist dabei vorgesehen, dass die Wärmeträgerfluidschläuche des Sondenkörpers als Schlauchbündel, also zusammengefasst in ein Bündel von Wärmeträgerfluidschläuchen, gemeinsam aufgewickelt sind. Die Wärmeträgerfluidschläuche können dabei gemeinsam auf eine Schlauchtrommel aufgewickelt sein. Alternativ können die Wärmeträgerfluidschläuche auch als ein Bündel zusammen aufgewickelt und in dieser Form, vorzugsweise mit Umreifungsband, zusammengebunden sein. Bei dieser Variante wird somit auf eine Schlauchtrommel verzichtet. Diese zusammengebundenen Bündel können dann z.B. auf einer Palette gelagert und transportiert werden. Zum Abwickeln beim Einbau in das Bohrloch kann das Bündel dann z.B. auf eine Haspel oder dergleichen aufgesteckt und von dort abgewickelt werden.

Um die eingangs geschilderte, beim Stand der Technik notwendige Prozedur auf der Baustelle bzw. am Bohrloch weiter zu vereinfachen, sehen besonders bevorzugte Ausgestaltungsformen vor, dass der Sondenkörper bereits im aufgewickelten Zustand der Wärmeträgerfluidschläuche einen, in das Bohrloch versenkbaren Sondenfuß aufweist, mittels dem zumindest zwei der, vorzugsweise alle, Wärmeträgerfluidschläuche des Sondenkörpers mechanisch miteinander verbunden sind. Bei diesen Ausgestaltungsformen wird der Sondenkörper somit im bereits, vorzugsweise fertig, zusammengebauten Zustand auf die Baustelle bzw. ans Bohrloch transportiert und kann dann rasch und mit wenig Aufwand in das Bohrloch eingebaut werden, um die Geothermiesonde fertigzustellen.

Weitere Merkmale und Einzelheiten bevorzugter Ausgestaltungsformen der Erfindung werden in der nachfolgenden Figurenbeschreibung erläutert. Es zeigen:
Fig. 1 eine teilweise vertikal geschnittene Darstellung eines auf eine Schlauchtrommel aufgewickelten erfindungsgemäßen Sondenkörpers;
Fig. 2 zeigt beispielhaft und ebenfalls schematisiert einen Längsschnitt durch ein Bohrloch, in dem sich das untere Ende des Sondenkörpers mit dem Sondenfuß befindet;
Fig. 3 zeigt losgelöst vom Bohrloch das obere Ende des Sondenkörpers mit dem Sondenfuß;
Fig. 4 zeigt einen Längsschnitt durch den in Fig. 3 dargestellten Teil des Sondenkörpers entlang der in Fig. 6 dargestellten Schnittlinie AA;
Fig. 5 zeigt einen Längsschnitt durch den in Fig. 3 dargestellten Teil des Sondenkörpers entlang der in Fig. 6 dargestellten Schnittlinie BB;
Fig. 6 zeigt eine Draufsicht auf den Sondenfuß und die Schnittlinie AA und BB;
Fig. 7 illustriert die Möglichkeit, an dem vorab gezeigten Sondenfuß ein weiteres Zusatzgewicht anzubringen und
Fig. 8 zeigt einen Schnitt durch ein Extrusionswerkzeug, welches zur Durchführung des weiter unten noch erläuterten erfindungsgemäßen Herstellungsverfahrens herangezogen werden kann.

Bevor auf die Figuren und die bevorzugten Merkmale der dargestellten Variante eingegangen wird, ist zunächst darauf hinzuweisen, dass es sich bei einer Geothermiesonde um eine Einrichtung handelt, die dazu vorgesehen ist, in ein Bohrloch eingebaut zu werden bzw. zu sein, um flüssiges aber evtl. auch gasförmiges Wärmeträgerfluid in den Wärmeträgerfluidschläuchen 3 in das Bohrloch 2 einzuspeisen und aus diesem wieder zu entnehmen. Hierdurch kann das Wärmeträgerfluid vom Untergrund 16 erwärmt werden oder vom Untergrund 16 abgekühlt werden. Die so aus dem Untergrund 16 entnommene Wärme kann z.B. zum Beheizen von Gebäuden oder auch Maschinen eingesetzt werden. Kühlt man das Wärmeträgerfluid mittels der Geothermiesonde im Untergrund 16 ab, so kann dies z.B. zum Kühlen von Gebäuden oder auch Maschinen eingesetzt werden. Bei dem erfindungsgemäßen Sondenkörper 1 handelt es sich um eine solche Geothermiesonde, er kann also als Geothermiesonde eingesetzt bzw. ins Bohrloch 2 eingebaut werden. Erfindungsgemäße Sondenkörper 1 können sowohl im Festgestein als auch im lockeren Erdreich eingesetzt werden.

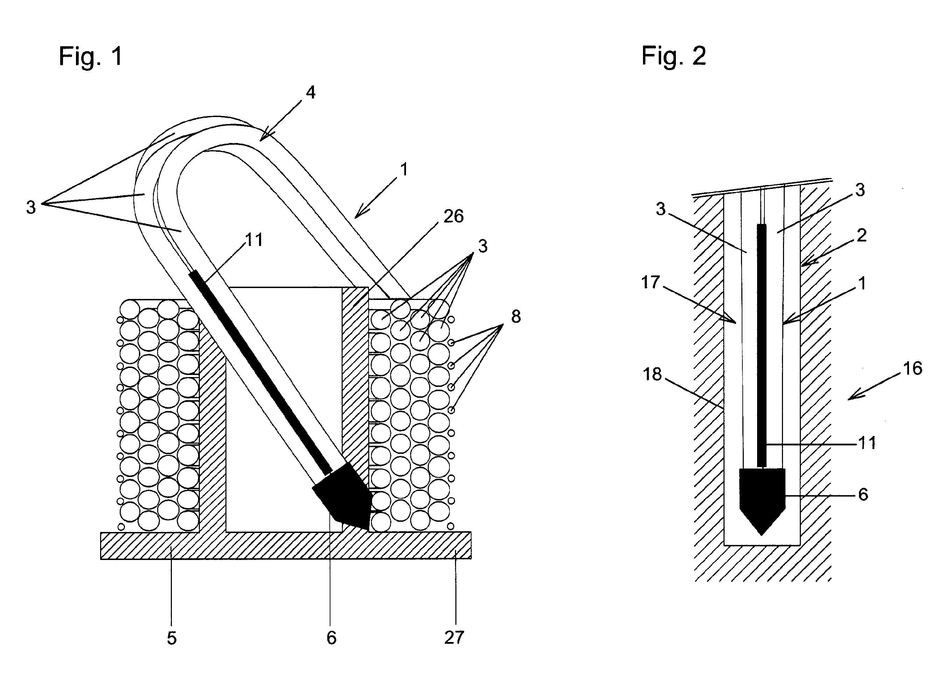

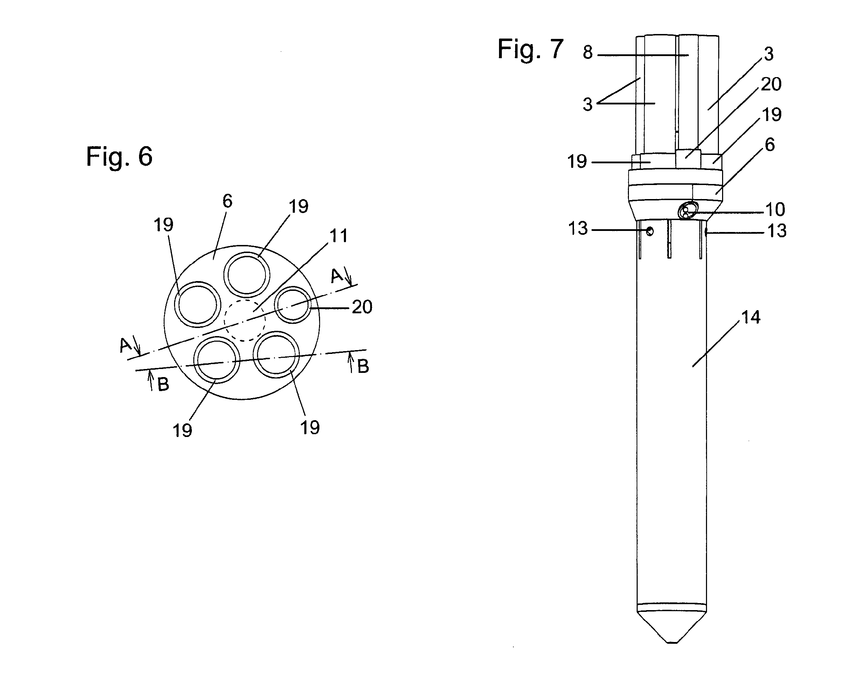

Der Begriff eines Schlauches beschreibt ein rohrartiges aber flexibles bzw. biegbares Gebilde, durch das ein Fluid, im vorliegenden Fall also das Wärmeträgerfluid, hindurchgeleitet werden kann. Die nachfolgend genannten Schläuche erlauben es z.B., dass der Sondenkörper 1 auf eine Schlauchtrommel 5 oder auch als Bündel ohne Schlauchtrommel 5 aufgewickelt werden kann. Erfindungsgemäße Sondenkörper 1 weisen mehrere, also zumindest zwei oder mehr Wärmeträgerfluidschläuche 3 auf. Beim Sondenfuß 6 handelt es sich um den, in der beispielhaft dargestellten Einbaustellung gemäß Fig. 2 in das Bohrloch 2 eingeschobenen vorderen Abschluss des Sondenkörpers 1, in dem die Wärmeträgerfluidschläuche 3 des Sondenkörpers 1 miteinander verbunden sind. In bevorzugten Ausgestaltungsformen handelt es sich beim Sondenfuß 6 also um den bohrlochseitigen Abschluss des Sondenkörpers 1. Dieser ist oft der Teil des Sondenkörpers 1, der am tiefsten in das Bohrloch 2 eingeführt ist. Allerdings ist mit Verweis auf Fig. 7 auch darauf hinzuweisen, dass dies nicht immer so sein muss. In Fig. 7 ist z.B. eine Variante gezeigt, bei der vor dem Sondenfuß 6 noch ein weiteres Zusatzgewicht 14 angeordnet ist.

Die Wärmeträgerfluidschläuche 3 des Sondenkörpers 1 sind vor dem Einbau des Sondenkörpers 1 in das Bohrloch 2 zur Lagerung und/oder zum Transport des Sondenkörpers 1 gemeinsam aufgewickelt. In Fig. 1 ist ein Beispiel gezeigt, bei dem die Wärmeträgerfluidschläuche 3 des Sondenkörpers 1 auf eine Schlauchtrommel 5 gemeinsam aufgewickelt sind. In der gezeigten, bevorzugten Variante sind die Wärmeträgerfluidschläuche 3, hier sogar zusammen mit dem Spülschlauch 8, zu einem Schlauchbündel 4 zusammengefasst und als solches auf die Schlauchtrommel 5 aufgewickelt. Günstig ist es dabei, wenn, wie hier auch realisiert, der Sondenkörper 1 bereits im aufgewickeltem Zustand der Wärmeträgerfluidschläuche 3 einen, in das Bohrloch 2 versenkbaren Sondenfuß 6 aufweist, mittels dem zumindest zwei der, vorzugsweise alle, Wärmeträgerfluidschläuche 3 des Sondenkörpers 1 mechanisch miteinander verbunden sind. Günstig ist es auch, wenn, wie hier auch realisiert, der Spülschlauch 8 mit dem Sondenfuß 6 verbunden ist. Über diese Verbindung mittels Sondenfuß 6 ist der Spülschlauch 8 dann auch mit den Wärmeträgerfluidschläuchen 3 verbunden. Somit ist der Spülschlauch 8 günstigerweise mittels des Sondenfußes 6 mit den Wärmeträgerfluidschläuchen 3 verbunden. Im gezeigten wie auch in anderen bevorzugten Ausgestaltungsformen erfindungsgemäßer Sondenkörper 1 ist günstigerweise vorgesehen, dass der Sondenkörper 1 genau vier Wärmeträgerfluidschläuche 3 aufweist. Um einerseits eine Spülung des Bohrlochs 2 durchführen zu können, z.B. um restliches Bohrgut aus dem Bohrloch 2 auszuspülen, oder das Bohrloch 2 nach dem Einbau des Sondenkörpers 1 mit Verfüllmaterial auffüllen zu können, sehen bevorzugte Varianten der Erfindung vor, dass der Sondenkörper 1 zusätzlich zu den Wärmeträgerfluidschläuchen 3 den zumindest einen, oben bereits genannten Spülschlauch 8 aufweist, durch den hindurch Spülflüssigkeit und/oder das besagte Verfüllmaterial in das Bohrloch 2 eingebracht werden kann. In diesem Zusammenhang ist es, wie auch realisiert und in Fig. 1 gezeigt, besonders günstig, wenn der Spülschlauch 8 vor dem Einbau des Sondenkörpers 1 in das Bohrloch 2 zur Lagerung und/oder zum Transport des Sondenkörpers 1, vorzugsweise als Teil des Schlauchbündels 4, gemeinsam mit den Wärmeträgerfluidschläuchen 3 aufgewickelt ist. Weiters ist es günstig, wenn der Spülschlauch 8 an seinem sondenfußseitigen Ende 9 eine Austrittsöffnung 10 für den Austritt von Spülflüssigkeit und/oder Verfüllmaterial in das Bohrloch 2 aufweist.

In Fig. 1 ist ein Vertikalschnitt durch die Schlauchtrommel 5 gezeigt, auf welche der Sondenkörper 1 aufgewickelt ist. Die Wärmeträgerfluidschläuche 3 und der Spülschlauch 8 sind hier als Schlauchbündel 4 zusammengefasst und mittels des Sondenfußes 6 miteinander verbunden. Die Schlauchtrommel 5 könnte auch als Schlauchhaspel bezeichnet werden. Es handelt sich im Allgemeinen bei der Schlauchtrommel 5 um einen Körper, auf den die Schläuche 3 und gegebenenfalls auch 8 aufgewickelt sind oder aufgewickelt werden können. Die Schlauchtrommel 5 weist hierzu günstigerweise einen zentralen Trommelkörper 26 auf. Auf diesen werden die Schläuche 3 bzw. 8 bzw. das Schlauchbündel 4 direkt aufgewickelt. Die Schlauchtrommel 5 kann, wie hier zumindest an dem unteren Ende der Schlauchtrommel 5 dargestellt, eine Seitenscheibe 27 aufweisen. Diese Seitenscheiben 27 dienen allgemein dazu, zu verhindern, dass die Schläuche 3 bzw. 8 bzw. das Schlauchbündel 4 vom zentralen Trommelkörper 26 abrutschen. Abweichend vom hier gezeigten Ausführungsbeispiel kann natürlich auch vorgesehen sein, dass der zentrale Trommelkörper 26 auf seinen beiden Stirnseiten jeweils mit einer Seitenscheibe 27 abgeschlossen ist. Der zentrale Trommelkörper 26 kann, wie hier realisiert, zylinderförmig sein, aber auch jede andere Form aufweisen. Dies gilt allgemein für die gesamte Schlauchtrommel 5. Sie kann letztendlich jede geeignete Form aufweisen, auf die der Sondenkörper 1 aufgewickelt werden kann.

Im gezeigten Ausführungsbeispiel sind die Wärmeträgerfluidschläuche 3 und auch der Spülschlauch 8 zu einem Schlauchbündel 4 zusammengefasst und so auf die Schlauchtrommel 5 aufgewickelt bzw. aufgetrommelt. Bei einem solchen Bündel handelt es sich um einen Packen lose zusammengefasster Schläuche, welche im gezeigten Ausführungsbeispiel nebeneinander verlaufen und durch den Sondenfuß 6 miteinander verbunden sind. Ein solches Schlauchbündel 4 könnte auch als Schlauchbüschel bezeichnet werden. In Fig. 1 schematisiert dargestellt ist der gesamte Sondenkörper 1 bereits fertiggestellt und kann so in das Bohrloch 2 eingeführt werden. Hierzu ist, wie günstigerweise bereits ausgeführt, auch der Sondenfuß 6 im auf die Schlauchtrommel 5 aufgewickelten Zustand des Sondenkörpers 1 bereits mit den Wärmeträgerfluidschläuchen 3 und dem zumindest einen Spülschlauch 8 verbunden.

Sollte die Länge des, vorzugsweise als Schlauchbündel 4, auf die Schlauchtrommel 5 aufgewickelten Sondenkörpers 1, für die gewählte Bohrlochtiefe nicht ausreichen, so können weitere Schlauchtrommeln 5 mit weiteren Teilen des Sondenkörpers 1 vorgesehen sein, auf denen dann die Wärmeträgerfluidschläuche 3 und soweit vorhanden auch der Spülschlauch 8, wiederum vorzugweise als Schlauchbündel 4, gemeinsam aufgewickelt sind. Auch bei diesen Ausgestaltungsformen reicht es dann aus, zum Einbau des Sondenkörpers 1 diesen jeweils nur von einer einzigen Schlauchtrommel 5 abzuwickeln, kommt man am Ende des auf der jeweiligen Schlauchtrommel 5 aufgewickelten Sondenkörpers 1 an, so kann dieser als Schlauchbündel 4 mit einem entsprechenden Schlauchbündel 4 eines auf einer weiteren Schlauchtrommel 5 aufgewickelten Sondenkörpers 1 verbunden werden, womit dann nach kurzer Zeit der Einbau der Geothermiesonde bzw. des Sondenkörpers 1 in das Bohrloch 2 fortgesetzt werden kann. Die Wärmeträgerfluidschläuche 3 bzw. Spülschläuche 8 der hintereinander anzustückelnden Teile des gesamten Sondenkörpers 1 können dann z.B. durch Verkleben, Verschweißen, über Verbindungsmuffen oder sonstige geeignete Arten und Weisen miteinander verbunden werden.

Alternativ zu der in Fig. 1 gezeigten Variante mit der Schlauchtrommel 5 können die Wärmeträgerfluidschläuche 3 auch als ein Schlauchbündel 4 zusammen aufgewickelt und in dieser Form, vorzugsweise mit Umreifungsband, zusammengebunden sein. Bei dieser Variante wird somit auf eine Schlauchtrommel 5 verzichtet. Diese zusammengebundenen Schlauchbündel 4 können dann z.B. auf einer Palette gelagert und transportiert werden. Zum Abwickeln beim Einbau in das Bohrloch 2 kann das Schlauchbündel 4 dann z.B. auf eine Haspel oder dergleichen aufgesteckt und von dort abgewickelt werden.

Fig. 2 zeigt schematisiert das untere Ende eines hier vertikal nach unten verlaufend ausgeführten Bohrloches 2 mit bereits eingeführtem Sondenkörper 1. Zwischen der Bohrlochwand 18 und dem Sondenkörper 1 befindet sich noch der Zwischenraum 17. Dieser wird nach dem Einbau des Sondenkörpers 1 und damit der Geothermiesonde mit an sich bekanntem Verfüllmaterial verfüllt. Das Verfüllmaterial dient dazu, dass die wärmeträgerfluidführenden Wärmeträgerfluidschläuche 3 einen möglichst innigen, gut wärme- bzw. kälteleitenden Kontakt zum die Bohrlochwand 18 umgebenden Untergrund 16 aufweisen. Das Verfüllmaterial kann über den Spülschlauch 8 und seine Austrittsöffnung 10 in den Zwischenraum 17 eingebracht werden, um diesen möglichst vollständig zu verfüllen. Vorher kann mittels einer entsprechenden Spülflüssigkeit über den Spülschlauch 8 auch der Zwischenraum 17 noch ausgespült werden, z.B. um restliches Bohrgut aus dem Bohrloch 2 zu entfernen.

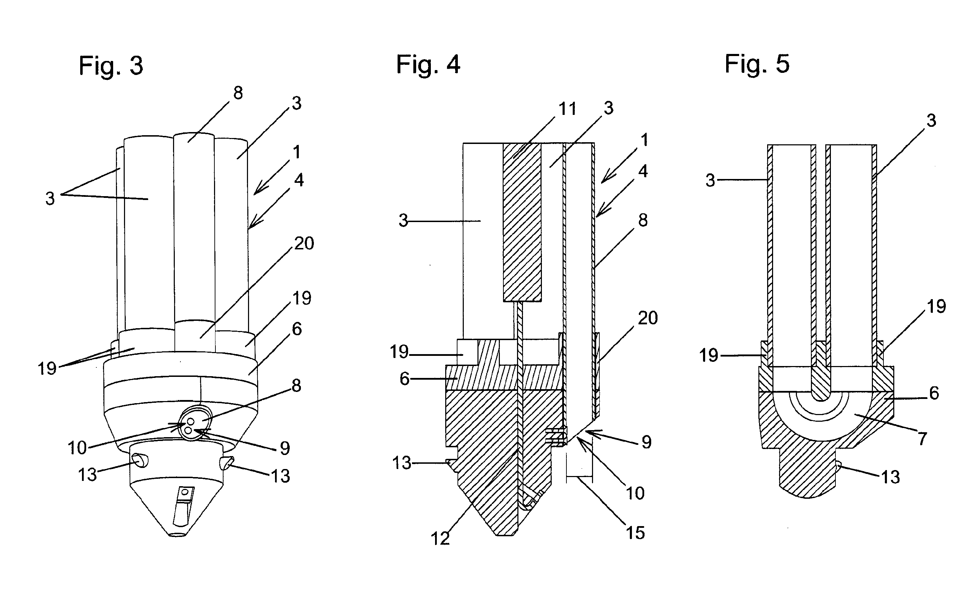

Fig. 3 zeigt das vordere Ende des Sondenkörpers 1 und damit auch den an die Wärmeträgerfluidschläuche 3 und den Spülschlauch 8 angeschlossenen Sondenfuß 6. Der Sondenfuß 6 weist Anschlussstutzen 19 und 20 auf, welche dem Anschluss der Wärmeträgerfluidschläuche 3 und des Spülschlauches 8 an den Sondenfuß 6 dienen. Dieser Anschluss kann durch geeignete, beim Stand der Technik bekannte Mittel wie z.B. Verkleben, Verschweißen, Verschrauben, Verklemmen und dergleichen erfolgen, je nachdem, welches Material der Sondenfuß 6 und die genannten Schläuche 3 bzw. 8 aufweisen. Natürlich sind auch Varianten denkbar, bei denen für den genannten Anschluss auf die Anschlussstutzen 19 und 20 verzichtet wird. Der Sondenfuß 6 kann z.B. aus einem geeigneten Kunststoff, aber im Sinne eines höheren Gewichtes und einer verbesserten Stabilität, auch aus Metall bestehen. Generell ist darauf hinzuweisen, dass die genannten Schläuche 3 und 8 und der Sondenfuß 6 aus demselben, aber auch aus verschiedenen Materialien bestehen können.

Bevorzugte Ausgestaltungsformen der Erfindung sehen jedenfalls vor, dass die Wärmeträgerfluidschläuche 3 und/oder der Spülschlauch 8 zumindest einen elastischen, vorzugsweise denselben, Kunststoff, vorzugsweise Polyethylen, oder ein Verbundmaterial mit zumindest einem Kunststoff, vorzugsweise Polyethylen, aufweisen oder daraus bestehen. So kann z.B. sogenanntes HD (high density) Polyethylen zum Einsatz kommen, um die Schläuche 3 und/oder 8 auszubilden.

Für den Einsatz als Geothermiesonde sollte das für die Schläuche 3 und/oder 8 eingesetzte Material jedenfalls eine Steifigkeit (E-Modul) von zumindest 1000 MPa (Megapascal) und/oder eine Zugfestigkeit von zumindest 22 MPa aufweisen. Diese Werte können z.B. gemäß ISO 527-2 bestimmt werden. Die Wärmeträgerfluidschläuche 3 und/oder Spülschläuche 8 weisen günstigerweise eine Wandstärke zwischen 2 und 6 mm, besonders bevorzugt zwischen 3 und 5,8mm, auf. Der Außendurchmesser der Wärmeträgerfluidschläuche 3 und/oder des Spülschlauchs 8 liegt günstigerweise zwischen 25 und 65mm, besonders bevorzugt zwischen 30 und 50mm. Besonders bevorzugte Ausgestaltungsformen der Erfindung sehen vor, dass der in Fig. 4 eingezeichnete Innendurchmesser 15 des Spülschlauches 8 zwischen 12 mm und 61 mm, vorzugsweise zwischen 24 mm und 41 mm beträgt.

In Fig. 3 ist gut zu erkennen, dass der Spülschlauch 8 in einer bevorzugten Ausgestaltungsform wie der hier gezeigten, an seinem sondenfußseitigen Ende 9 eine Austrittsöffnung 10 für den Austritt der bereits genannten Spülflüssigkeit und/oder des Verfüllmaterials in das Bohrloch 2 aufweist. Dabei kann die Austrittsöffnung 10 des Spülschlauches 8, wie hier auch realisiert, auf der, der Seite mit den Wärmeträgerfluidschläuchen 3 entgegengesetzten Seite des Sondenfußes 6 angeordnet sein. In bevorzugten Ausführungsbeispielen, wie dem hier gezeigten, ist jedenfalls vorgesehen, dass die Wärmeträgerfluidschläuche 3 ausschließlich auf einer Seite des Sondenfußes 6 angeordnet sind.

Im Bereich der Austrittsöffnung 10 kann der Spülschlauch 8 eine Form aufweisen, die die Spülflüssigkeit bzw. das Verfüllmaterial beim Austritt aus der Austrittsöffnung 10 mit einem gewissen Drall beaufschlagt. Im hier gezeigten Ausführungsbeispiel ist der Spülschlauch 8 im Bereich seines Endes 9 bzw. mit der Austrittsöffnung 10 schräg abgeschnitten. Bevorzugt ist die Austrittsöffnung 10 im Bereich des Sondenfußes 6 ausgebildet, sie kann als Öffnung im Sondenfuß 6 realisiert sein.

Wie im Schnitt entlang der Schnittlinie BB aus Fig. 6 in Fig. 5 gezeigt, ist günstigerweise vorgesehen, dass die Wärmeträgerfluidschläuche 3 im Sondenfuß 6 paarweise fluidleitend mittels einer, vorzugsweise u-förmigen, Verbindungsleitung 7 miteinander verbunden sind. Hierdurch wird erreicht, dass das durch die Wärmeträgerfluidschläuche 3 hindurch geleitete Wärmeträgerfluid sowohl bei seinem Weg in das Bohrloch 2 hinein als auch bei seinem Weg aus dem Bohrloch 2 hinaus im Temperaturaustausch mit dem Untergrund 16 steht.

Um das Einführen des Sondenkörpers 1 in vorzugsweise vertikal nach unten weisende Bohrlöcher 2 zu vereinfachen, ist es günstig, ein Zusatzgewicht im Bereich des Sondenfußes 6 am Sondenkörper 1 vorzusehen. Beim Stand der Technik ist es hierzu bekannt, auf der den Wärmeträgerfluidschläuchen 3 entgegengesetzten Seite des Sondenfußes 6 ein entsprechendes Zusatzgewicht zu befestigen. Dies hat aber den Nachteil, dass dadurch die Wärmeträgerfluidschläuche 3 nicht bis ins Bohrlochtiefste reichen, und somit das Bohrloch 2 allein aufgrund des benötigten Zusatzgewichtes tiefer gebohrt werden muss, als dies ohne Zusatzgewicht notwendig wäre.

Um diese Problematik zu vermeiden, ist günstigerweise vorgesehen, dass im Bereich anschließend an den Sondenfuß 6 zwischen den Wärmeträgerfluidschläuchen 3 ein Zusatzgewicht 11 angeordnet ist. Dieses Zusatzgewicht ist in der Schnittdarstellung gemäß Fig. 4 und in den Fig. 1 und 2 dargestellt. Es ist bevorzugterweise stangen- oder rohrförmig ausgebildet. In bevorzugten, wie der hier dargestellten Variante befindet sich das Zusatzgewicht 11 in einem zentralen, zwischen den Wärmeträgerfluldschläuchen 3 und gegebenenfalls auch dem Spülschlauch 8 angeordneten Zwischenraum. In Fig. 6 ist die Lage des Zwischenraums durch das dort angeordnete, in Fig. 6 gestrichelt dargestellte Zusatzgewicht veranschaulicht. Bei dem Zusatzgewicht 11 handelt es sich günstigerweise um ein vom Sondenfuß 6 gesondertes, vorzugsweise mit dem Sondenfuß 6 über eine Verbindungseinrichtung 12 verbindbares bzw. verbundenes, Bauteil. Im gezeigten Ausführungsbeispiel handelt es sich bei der in Fig. 4 sichtbaren Verbindungseinrichtung 12 um einen einerseits am Sondenfuß 6 und andererseits am Zusatzgewicht 11 befestigten Metallstreifen. Dies ist natürlich nur eins von vielen möglichen Ausführungsbeispielen. Um eine entsprechende Masse bei möglichst wenig Volumenbedarf bereitzustellen, ist günstigerweise vorgesehen, dass das Zusatzgewicht 11 Metall aufweist oder daraus besteht. Die Länge des Zusatzgewichtes 11 liegt günstigerweise zwischen 0,5m und 2m, vorzugsweise zwischen 0,75m und 1,5m. Das Gewicht bzw. die Masse des Zusatzgewichtes beträgt günstigerweise zwischen 8 kg und 15 kg, vorzugsweise zwischen 9 kg und 12 kg. Im fertiggestellten Sondenkörper 1 ist das Zusatzgewicht 11 günstigerweise bereits im genannten Zwischenraum zwischen den Wärmeträgerfluidschläuchen 3 angeordnet. Der Sondenkörper 1 wird günstigerweise bereits mit Zusatzgewicht 11 auf die Baustelle bzw. ans Bohrloch angeliefert.

Sollte sich dann das Zusatzgewicht 11 als nicht ausreichend erweisen, so können bevorzugte Ausgestaltungsformen vorsehen, dass der Sondenfuß 6 einen Adapter 13 für die Befestigung eines weiteren Zusatzgewichtes 14 auf seiner von den Wärmeträgerfluidschläuchen 3 abgewandten Seite aufweist. Im Gegensatz zum Zusatzgewicht 11, welches auf der den Wärmeträgerfluidschläuchen 3 zugewandten Seite des Sondenfußes 6 angeordnet ist, steht das weitere Zusatzgewicht 14, sofern es über den Adapter 13 am Sondenfuß 6 befestigt ist, somit auf der den Wärmeträgerschläuchen 3 entgegengesetzten Seite über den Sondenfuß 6 über. Fig. 7 zeigt den Zustand, bei dem ein entsprechendes weiteres Zusatzgewicht 14 am Adapter 13 des Sondenfußes 6 befestigt ist. Beim Adapter 13 kann es sich um Schnappstifte, Bajonettverschlüsse, Verschraubungen oder alle anderen beim Stand der Technik bekannten und bei dieser Aufgabenstellung einsetzbaren Verbindungseinrichtungen handeln.

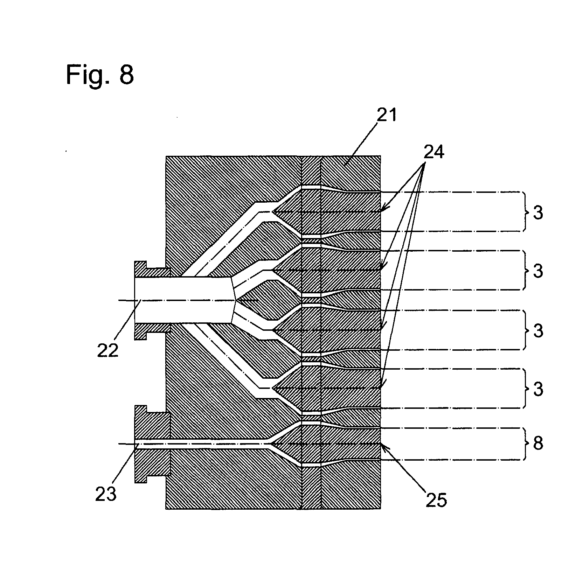

Bevorzugte Verfahren zur Herstellung eines erfindungsgemäßen Sondenkörpers 1 sehen vor, dass die Wärmeträgerfluidschläuche 3 und der Spülschlauch 8, soweit vorhanden, gemeinsam extrudiert werden. Dabei ist vorzugsweise vorgesehen, dass anschließend die Wärmeträgerfluidschläuche 3 und der gegebenenfalls auch vorhandene Spülschlauch 8, vorzugsweise als Schlauchbündel 4, gemeinsam auf die eine Schlauchtrommel 5 aufgewickelt werden oder gemeinsam als Schlauchbündel 4 aufgewickelt und dann, vorzugsweise mit Umreifungsband, zusammengebunden werden. Bei der letztgenannten Variante wird somit auf die Schlauchtrommel 5 verzichtet. Das gemeinsame Extrudieren kann z.B. über ein gemeinsames Extrusionswerkzeug 21 erfolgen, wie dies beispielhaft in Fig. 8 in einem Längsschnitt dargestellt ist. Dieses Extrusionswerkzeug 21 weist Zuführkanäle 22 und 23 für das zu extrudierende Material auf. Diese können an eine, beim Stand der Technik an sich bekannte Extrusionseinrichtung angeschlossen sein. Über die Austrittsdüsen 24 werden dann die in Fig. 8 gestrichelt dargestellten Wärmeträgerfluidschläuche 3 gleichzeitig extrudiert. Soweit vorhanden, kann gleichzeitig auch der Spülschlauch 8 über die Austrittsdüse 25 mit extrudiert werden. Die dann bereits nebeneinander verlaufend angeordneten Wärmeträgerfluidschläuche 3 und auch der gegebenenfalls vorhandene, ebenfalls daneben verlaufende Spülschlauch 8 können dann, vorzugsweise als Schlauchbündel 4, gleich nach entsprechender Abkühlung auf die Schlauchtrommel 5 oder wie oben genannt als zusammengebundenes Schlauchbündel 4 ohne Schlauchtrommel 5 gemeinsam aufgewickelt werden.

### Legende

zu den Hinweisziffern:
- 1: Sondenkörper
- 2: Bohrloch
- 3: Wärmeträgerfluidschlauch
- 4: Schlauchbündel
- 5: Schlauchtrommel
- 6: Sondenfuß
- 7: Verbindungsleitung
- 8: Spülschlauch
- 9: Ende
- 10: Austrittsöffnung
- 11: Zusatzgewicht
- 12: Verbindungseinrichtung
- 13: Adapter
- 14: weiteres Zusatzgewicht
- 15: Innendurchmesser
- 16: Untergrund
- 17: Zwischenraum
- 18: Bohrlochwand
- 19: Anschlussstutzen
- 20: Anschlussstutzen
- 21: Extrusionswerkzeug
- 22: Zufuhrkanal
- 23: Zufuhrkanal
- 24: Austrittsdüse
- 25: Austrittsdüse
- 26: zentraler Trommelkörper
- 27: Seitenscheibe

## Patentansprüche

1. Sondenkörper (1) für den Einbau in ein Bohrloch (2) als Geothermiesonde mit mehreren nebeneinander verlaufenden, von Wärmeträgerfluid durchströmbaren Wärmeträgerfluidschläuchen (3), **dadurch gekennzeichnet, dass** die, vorzugsweise alle, Wärmeträgerfluidschläuche (3) des Sondenkörpers (1) vor dem Einbau des Sondenkörpers (1) in das Bohrloch (2) zur Lagerung und/oder zum Transport des Sondenkörpers (1), vorzugsweise als ein Schlauchbündel (4), gemeinsam aufgewickelt sind.

2. Sondenkörper (1) nach Anspruch 1, **dadurch gekennzeichnet, dass** der Sondenkörper (1) bereits im aufgewickelten Zustand der Wärmeträgerfluidschläuche (3) einen, in das Bohrloch (2) versenkbaren Sondenfuß (6) aufweist, mittels dem zumindest zwei der, vorzugsweise alle, Wärmeträgerfluidschläuche (3) des Sondenkörpers (1) mechanisch miteinander verbunden sind.

3. Sondenkörper (1) nach Anspruch 2, **dadurch gekennzeichnet, dass** die Wärmeträgerfluidschläuche (3) im Sondenfuß (6) paarweise fluidleitend mittels einer, vorzugsweise U-förmigen, Verbindungsleitung (7) miteinander verbunden sind.

4. Sondenkörper (1) nach einem der Ansprüche 1 bis 3, **dadurch gekennzeichnet, dass** der Sondenkörper (1) genau vier Wärmeträgerfluidschläuche (3) aufweist.

5. Sondenkörper (1) nach einem der Ansprüche 1 bis 4, **dadurch gekennzeichnet, dass** der Sondenkörper (1) zusätzlich zu den Wärmeträgerfluidschläuchen (3) zumindest einen Spülschlauch (8) zur Einbringung von Spülflüssigkeit und/oder Verfüllmaterial in das Bohrloch (2) aufweist, wobei der Spülschlauch (8) vor dem Einbau des Sondenkörpers (1) in das Bohrloch (2) zur Lagerung und/oder zum Transport des Sondenkörpers (1), vorzugsweise als Teil des Schlauchbündels (4), gemeinsam mit den Wärmeträgerfluidschläuchen (3) aufgewickelt ist.

6. Sondenkörper (1) nach Anspruch 5, **dadurch gekennzeichnet, dass** der Spülschlauch (8) mittels des Sondenfußes (6) mit den Wärmeträgerfluidschläuchen (3) verbunden ist.

7. Sondenkörper (1) nach Anspruch 5 oder 6, **dadurch gekennzeichnet, dass** der Spülschlauch (8) an seinem sondenfußseitigen Ende (9) eine Austrittsöffnung (10) für den Austritt von Spülflüssigkeit und/oder Verfüllmaterial in das Bohrloch (2) aufweist.

8. Sondenkörper (1) nach einem der Ansprüche 1 bis 7, **dadurch gekennzeichnet, dass** die Wärmeträgerfluidschläuche (3) und der Spülschlauch (8) zumindest einen elastischen, vorzugsweise denselben, Kunststoff, vorzugsweise Polyethylen, oder ein Verbundmaterial mit zumindest einem Kunststoff, vorzugsweise Polyethylen, aufweisen oder daraus bestehen.

9. Sondenkörper (1) nach einem der Ansprüche 2 bis 8, **dadurch gekennzeichnet, dass** im Bereich, vorzugsweise unmittelbar, anschließend an den Sondenfuß (6) zwischen den Wärmeträgerfluidschläuchen (3) ein, vorzugsweise stangen- oder rohrförmiges, Zusatzgewicht (11) angeordnet ist.

10. Verfahren zur Herstellung eines Sondenkörpers (1) nach einem der Ansprüche 1 bis 9, **dadurch gekennzeichnet, dass** die Wärmeträgerfluidschläuche (3) und gegebenenfalls auch der Spülschlauch (8) gemeinsam extrudiert und anschließend, vorzugsweise als Schlauchbündel (4), gemeinsam aufgewickelt werden.
